# EUROPEAN PATENT APPLICATION

(11) **EP 4 776 249 A1**
(43) Date of publication of application: **15.07.2026**
(21) Application number: 25151268.7
(22) Date of filing: 10.01.2025
(51) Int. Cl.: G07C 9/00, G05B 19/042

(54) **DOOR SYSTEM**

(71) Applicant: dormakaba Schweiz AG, 8153 Rümlang (CH)
(72) Inventor: IBRAHIM, Patrick, 8153 Rümlang (CH); SIVAGURUNATHAN, Thabothanan, 618303 Singapore (SG)
(74) Representative: Balder IP Law, S.L.

(57) **Abstract**

The invention is about a door system (100-103) with a computing unit (10, 10a, 10b) and a door device (40) for unlocking and/or opening a door,
wherein the door device (40) includes an electronic memory (4010) for storing a digital configuration,
wherein the door system (100-103) is designed to provide multiple different device modification procedures for the door device (40), which are configured to change the digital configuration of the door device (40), wherein each device modification procedure (200, 300, 400) of the multiple device modification procedures (200, 300, 400) includes changing the digital configuration of the door device (40),
wherein the different device modification procedures differ in the type of digital configuration change,
wherein the different device modification procedures are each designed such that a process step (201-212, 301, 305-310, 312, 401-412) is to be carried out manually by an user using at least one configuration device (30),
wherein multiple process stages (2000-2005) are digitally predefined for the different device modification procedures, and the process stages (2000-2005) are the same in the different device modification procedures.

## Description

The present invention relates to a door system with a computing unit and a door device for unlocking and/or opening a door. The door device includes an electronic memory for storing a digital configuration. The door system is designed to provide multiple different device modification procedures for the door device, which are configured to change the digital configuration of the door device. Each device modification procedure of the multiple device modification procedures includes changing the digital configuration of the door device. The different device modification procedures differ in the type of digital configuration change. The different device modification procedures are each designed such that a process step is to be carried out manually by a user using at least one configuration device.

EP 2 701 124 A1 discloses an electronic lock as such a door device. A technician owns a mobile configuration device which can receive a task list, wherein the task list comprises different tasks for device modification procedures like installation, maintenance, and/or replacement of the electronic lock. Each of these tasks encompasses a change of the digital configuration of the lock. The tasks can be completed and an acknowledgement message can be sent to a management system. A database comprises a table with technician tasks. However, the door system lacks a structured approach to how tasks can arise and how tasks can be controlled. It is also not possible to finish tasks in a structured manner except by successfully carrying out the task.

It is therefore the object of the invention to provide a door system and a method for carrying out multiple different digital device modification procedures in which the different configuration changes proceed in a particularly controlled and controllable manner.

The solution to the object is achieved by the features of the independent claims. The dependent claims relate to preferred embodiments of the invention. Features and details described in connection with the door system according to the invention also apply in connection with the method according to the invention and vice versa. In particular, a method that can be carried out with a system according to any one of claims 1 to 13 and/or a system with which a method according to claim 14 can be carried out is protected.

According to the invention, it is provided that multiple process stages are digitally predefined for the different device modification procedures, and the process stages are the same in the different device modification procedures.

Preferably, all process stages are the same in the different device modification procedures.

Throughout the present disclosure, the term "door device" may refer to a component or assembly that is installed on or integrated with a door to control its locking and/or opening mechanism. This door device may include electronic and mechanical parts that work together to secure the door and allow authorized access. The door device may be equipped with an electronic memory for storing a digital configuration and may be capable of executing various device modification procedures.

Specific examples of a door device controlling the locking of the door may include an electronic lock, especially an electronic locking cylinder, a pad lock, a smart door handle, motorized locks, or an automated door opener with a reader. Electronic locking cylinders and pad locks can be summarized as locking devices.

Specific examples of a door device for controlling the opening of a door includes automatic door drives like sliding door drive, swing door drive, or revolving door drive.

Specific examples of a door device for controlling the opening of the door and locking of the door can include a control unit that is electronically connected to an electronic lock and to an automatic door drive.

The computing unit can be located anywhere. The computing unit can, for example, be a server. The server can also be virtual, especially as a cloud server or as a virtual area of a cloud server. In particular, a database is stored in the computing unit. The computing unit thus includes at least one electronic memory. A digital representation of the door device can be stored in the computing unit. The term digital representation refers to a virtual representation of the door device, which is electronically stored in the computing unit.

The door system can include only one door device, but usually the door system includes a computing unit and several door devices. In some embodiments, each of the several door devices are assigned to a different door. A digital representation of the several door devices can be stored in the computing unit.

In one specific example the door system corresponds to a locking system. Within the locking system, there are multiple door devices wherein the door devices are built as electronic locks, especially as electronic locking cylinders. Additionally, the locking system provides a specific access authorization concept. For example, multiple authorized users can be assigned to the locking system, with each authorized user being granted access to one or more of the door devices. In the context of this disclosure, an assignment can be understood to be a logical assignment.

The authorized users can be divided into authorization groups. For example, the locking system may pertain to a multi-tenant building. One authorization group may be intended for the caretaker, who is allowed to lock all door devices except for the door devices of the individual apartments. Another authorization group may be intended for the apartment owners, who are allowed to lock the door devices at the main entrance and their own apartment, for example.

In an alternative example, the locking system may pertain to critical infrastructure. One authorization group may unlock door devices that secure a physical area with a security level or an infrastructure device with a security level. Another authorization group, on the other hand, may not unlock these door devices but may only unlock door devices that do not secure an area or an infrastructure device with this security level.

Preferably, it is provided that the locking system includes multiple door devices that are assigned to a locking system owner, such as a housing association, a critical infrastructure operator, a facility manager, or a housing administrator.

Preferably, a locking system is additionally or alternatively characterized by the fact that the locking system includes at least one list of blocked access authorizations and/or blocked access devices, referred to as a blacklist. The blocked access authorizations and/or blocked access devices may pertain to one or more door devices of the locking system. The at least one blacklist is preferably limited to a single locking system. In other words, different locking systems are distinguished by their respective blacklists.

Preferably, a locking system is additionally or alternatively characterized by the fact that the locking system includes at least one list of allowed access authorizations, referred to as a whitelist. The allowed access authorizations may pertain to one or more door devices of the locking system. The at least one whitelist is preferably limited to a single locking system. In other words, different locking systems are distinguished by their respective whitelists.

Throughout the present disclosure, the term "electronic memory" may refer to a data storage component that is used to store digital information within the door device. This electronic memory may include non-volatile memory types such as flash memory, EEPROM, or any other suitable memory technology that retains data even when the power is turned off. The electronic memory may store the digital configuration of the door device.

Throughout the present disclosure, the term "device modification procedures" may refer to the processes or methods used to change the digital configuration of the door device. These procedures may involve at least one step that is carried out manually by a user using the configuration device. The device modification procedures may differ in the type of digital configuration change they perform.

Examples for device modification procedures include
- commissioning the door device
- decommissioning the door device
- updating the firmware of the door device
- updating parameters of the door device
- updating an encryption key to exchange messages with the computing unit.

In case of a door device for controlling the locking of the door, examples for device modification procedures include:
- updating a list of blocked access authorizations and/or blocked access devices of the door device, the list is referred to as blacklist
- updating a list of allowed access authorizations of the door device, the list is referred to as whitelist

In case of a door device for controlling the locking and the opening of the door, examples for device modification procedures include:
- updating computer programming instructions for coordinating the unlocking/locking and the opening/closing of the door.

According to the invention, there are several different device modification procedures for the same door device of the door system. These different device modification procedures may be any combination of at least two of the above mentioned device modification procedures, e. g. updating the firmware of the door device and updating a blacklist.

Some further examples wherein there are at least two different modification procedures, the modification procedures may include:
- updating the firmware of the door device and decommissioning the door device
- updating the firmware of the door device and commissioning the door device
- commissioning and decommissioning the door device

Some further examples wherein there are at least three different modification procedures, the modification procedures may include:
- updating the firmware of the door device, updating the blacklist, and decommissioning a device
- updating the firmware of the door device, updating parameter of the door device, and commissioning the door device

Preferably, there are at least three different device modification procedures for the same door device of the door system. Particularly preferred, there are at least four different device modification procedures for the same door device of the door system. E.g.
- updating the firmware of the door device, updating the blacklist, commissioning, and decommissioning the door device,
- updating the firmware of the door device, updating the parameter, commissioning, and decommissioning the door device.

Throughout the present disclosure, the term "digital configuration" may refer to the set of digital parameters, settings, and data that define the operation and behavior of the door device. Examples for the digital configuration is the installed firmware version, the encryption key, the white list, the black list, the computer instructions for coordinating the different operations of the door.

Throughout the present disclosure, the term "configuration device" may refer to a tool or device used by a user to interact with and modify the digital configuration of the door device. This configuration device may include hardware and/or software components that enable the user to perform device modification procedures. The configuration device may communicate with the door device through wired or wireless connections. Specific examples of a configuration device may include a smartphone with a configuration app, a dedicated programming tool e. g. for an access control system, or a computer with configuration software, or a physical electronical or electro-mechanical key.

In one embodiment the configuration device is supposed to be near the door device to perform the device modification procedure for the door device nearby. For example, the configuration device and the door device can communicate via a wireless communication connection such as NFC, Bluetooth Low Energy, or Ultra Wide Band. The communication connection is thus preferably designed as a wireless short-range communication. For this purpose, the configuration device and the door device may include corresponding transmitting and receiving devices. This communication connection is preferably used if the configuration device is a smartphone, a programming tool or a computer.

Alternatively, the configuration device, establishes a wired electrical connection to the door device. For this purpose, the configuration device and the door device include corresponding transmission elements. "Wired" (also referred to as non-wireless) means that the connection is made via at least one conductor in the configuration device, which can be brought into electrically conductive contact with door device electronics. For this purpose, the configuration device and the door device may include corresponding electrical contacts as transmission elements.

It is preferably provided that the computing unit can establish a connection to the configuration device via the Internet and/or a telecommunications network. In some cases, the configuration device and the computing unit can communicate directly via the Internet and/or a telecommunication network. For this purpose, the device and the computing unit may include corresponding transmitting and receiving units. Alternatively, the configuration device can communicate indirectly with the computing unit. E. g. the configuration device designed as a key communicates with a mobile device as transfer device and the transfer device communicates with the computing unit via the Internet and/or a telecommunication network. The key can communicate with the transfer device over a wireless short range communication like NFC, Bluetooth Low Energy, or Ultra Wide Band.

The process step to be carried out manually by a user may include going near the door device whose digital configuration is to be changed. The process step to be carried out manually by a user may include starting an interaction with that door device like interaction with the configuration device like pressing a key of the configuration device and/or inserting the key into the door device.

Throughout the present disclosure, the term "process stage" may refer to the predefined phases or levels within a device modification procedure. These stages represent different levels of progress in the procedure. Each process stage is designed to ensure that specific actions are completed before moving on to the next stage, thereby providing a structured and controlled approach to modifying the digital configuration of the door device. According to the invention, the process stages are the same across different device modification procedures, providing a consistent framework for modifying the digital configuration of the door device. The process stages ensure that each device modification procedure is carried out in a controlled and systematic manner, reducing the risk of errors and ensuring the integrity of the digital configuration of the door device. Since the process stages are the same across different device modification procedures, information about individual device modification procedures are easier for the user to understand so that the user can perform the modification procedure in a better way.

It may be provided that transitions are defined in the device modification procedures, indicating which process stage can transition into which other process stage. Preferably, the transitions are the same for the different device modification procedures.

Throughout the present disclosure, the term "transitions" may refer to the predefined rules or conditions that determine how one process stage can move to another process stage within the device modification procedures. These transitions may be programmed into the system to ensure a controlled and systematic progression through the modification process. By defining transitions, the device modification procedures ensure a controlled and systematic progression through the modification process.

It may be provided that at least partially a transition from one process stage to the next process stage depends on at least one condition. Throughout the present disclosure, the term "condition" may refer to the specific criteria or requirements that must be met for a transition from one process stage to the next process stage to occur.

Preferably, the condition is differently defined for the different device modification procedures and stored in the door system. Defining conditions differently for different device modification procedures may provide flexibility and customization, allowing the system to accommodate various types of modifications and user requirements. For example, the condition for successfully terminating the device modification procedure for updating the blacklist may be storing the blacklist in the electronic memory, but the condition for successfully terminating the device modification procedure for decommissioning may be removing encryption key for the electronic memory, among others. A condition for unsuccessfully terminating the device modification procedure for updating a firmware may be three unsuccessful attempts to transfer the firmware update to the door device after getting the configuration device into communication with the door device, but a condition for unsuccessfully terminating for commissioning might be that the door device is already registered in the computing unit.

It may be provided that the device modification procedures are only terminated by the process stages "cancelled", "failed", and "completed". Therefore, there are exactly three process stages which can terminate the device modification procedure. Throughout the present disclosure, the term "cancelled" may refer to a process stage where the device modification procedure is terminated by the user or the system before it is completed. This stage may be reached if the user decides to abort the procedure. Throughout the present disclosure, the term "failed" may refer to a process stage where the device modification procedure is terminated due to an error or unsuccessful completion of a required step. Throughout the present disclosure, the term "completed" may refer to a process stage where the device modification procedure is successfully finished, and the changes to the digital configuration are finalized.

It may be provided that the device modification procedures are automatically terminated in at least some cases. Especially, the process stages "failed" and "completed" may be automatically reached. The process stage "failed" e. g. may be automatically reached when a condition indicating failure occurs. The process stage completed" may be automatically reached when a condition indicating successful completion occurs. E. g. the process stage "failed" for a firmware update is automatically reached by one or several unsuccessful attempts to transfer the firmware update to the door device after getting the configuration device into communication with the door device or after another configuration device was faster to do the firmware update. The process stage "completed" for a firmware update is automatically reached after installation of the firmware update in the door device.

It may be provided that the process stage "cancelled" can only be reached if digital data for direct or indirect transfer to the configuration device is provided in the computing unit but not yet transferred. In other words: the digital data has not been sent away to the configuration device by the computing unit when the process stage "cancelled" can be reached.

Preferably, the computing unit receives a command to terminate the device modification procedure subsequently to providing the digital data in the computing unit. The computing device may receive the command to terminate the device modification procedure via an input device of the computing unit, in particular to deactivate the digital data. In other word, a prerequisite for reaching the process stage "cancelled" can be a manual input of a user.

Alternatively, the computing unit can generate a command to terminate the device modification procedure itself. E.g. if the device modification procedure has been carried out by another configuration device and the computing unit get knowledge about this, the computing device can terminate the device modification procedure by itself. Preferably, the computing device deactivates the digital data for the configuration device.

It may be provided that the configuration device is designed to only carry out a device modification procedure. Therefore, the configuration device cannot terminate a device modification procedure on its own. In one embodiment, the device modification procedure can only be terminated by the process stage "cancelled" in the computing unit or by the process stages "failed" or "completed" in the door device or in the computing unit, especially automatically in the door device or in the computing unit.

Preferably, the configuration device is designed to be free of a manual input option to terminate the device modification procedure. The configuration device may comprise an input option like a button, a key, a keyboard or a touch display, however, the input option cannot be used to terminate the device modification procedure. Therefore, the options to terminate the device modification procedure is restricted to the computing unit and in the door device. Since the configuration device may be prone to manipulation, this enhances the security of the door system. Additionally, having a configuration device that is free of a manual input option to terminate the device modification procedure may prevent unauthorized or accidental terminations, thereby enhancing the security and reliability of the device modification procedure.

It may be provided that the door system is designed such that only the computing unit can start device modification procedures in the computing unit. Since the configuration device or the door device is more prone to manipulation, the security can be enhanced if only the computing unit can initiate the device modification procedure. By centralizing the initiation of procedures in the computing unit, the system may reduce the risk of unauthorized modifications and ensure that all changes are properly authenticated and logged.

A device modification procedure is preferably started by generating a digital command message. Throughout the present disclosure, the term "digital command message" may refer to an electronic message generated by the computing unit to initiate a device modification procedure. This message may contain digital instructions or digital commands that are to be executed by the door device to modify its digital configuration.

Preferably, the digital command message includes an ID of the user's configuration device. Throughout the present disclosure, the term "ID" may refer to a unique identifier associated with the user's configuration device. This identifier may be used to authenticate the configuration device and ensure that the digital command message is directed to the correct device. It is not arbitrary, but rather a part of the device modification procedure, that the correct, selected configuration device is involved in the device modification procedure. Preferably the ID of the selected configuration device is stored in the computing unit so that the device modification procedure can be tracked.

The computing unit can select the configuration device as receiver of the digital command message itself or the computing unit can receive the selection of the configuration device as receiver of the digital command message via the input device. E. g. an administrator can select the configuration device for transferring the digital command to the door device.

Throughout the present disclosure, the term "administrator" may refer to a user with a specific user role that grants them the permissions to manage and oversee the device modification procedures.

At least one digital command of the digital command message may be used to be transferred to the door device, wherein the door device is designed to change the configuration based on the digital command.

It may be provided that the door device is designed to automatically receive the digital command when the door device is in communication with the configuration device. Preferably, the door device automatically executes the digital command after receiving the digital command. Alternatively, the door device can do an automatic check before executing the digital command. The automatic check can comprise checking whether the configuration device is on a blacklist, checking a configuration change number etc.

The only way to influence the device modification procedure manually may be given in the computing device. This approach may improve the overall security of the door system by ensuring that only authorized and authenticated commands are executed.

It may be provided that an authorization role of the user is stored in the computing unit. The authorization role of the user may be assigned to the digital representation of the configuration device which belongs to the user in the computing unit. There are several different types of authorization roles defined in the computing unit. The authorization roles define whether the user is allowed to carry out the manual process step of a specific type of the device modification procedure or not. E. g. one authorization role defines that the authorization role allows the user to carry out the manual process step of all types of the device modification procedure. Another authorization role defines that the user is allowed to carry out the manual process step of a specific type of device modification procedure, but not another type of device modification procedure. E. g. the second user may carry out a firmware update, but may not carry out a decommissioning. In other words, the term "authorization role" may refer to the set of permissions assigned to a user within the door system.

Preferably, the door system is designed such that the device modification procedure is only started if the authorization role of the user, to whom the configuration device is assigned or to whom the user has access to, allows the execution of the device modification procedure. This ensures that only authorized individuals can initiate and execute device modification procedures, thereby enhancing the security and control over the modification process.

The computing unit may suggest to an administrator only users with a matching authorization role. The administrator can confirm the suggestion via the input device. Alternatively, the computing unit automatically selects users and/or configuration devices for the device modification procedure with a matching authorization role.

It may be provided that after generating the digital command message, the digital command message can only be modified in the process stage "draft" until an administrator changes the status of the command message to be ready for transfer through interaction with the computing unit. The stage wherein the status of the command message is ready for transfer is called "ready".

It may be necessary that the administrator who can change the status of the command message to "ready for transfer" is allocated to a specific, predefined user role. In other words, not all administrators are allowed to change the status of the command message to "ready for transfer". Thereby, not all administrators are able to create a prerequisite to generate the process stage "ready".

Throughout the present disclosure, the stage "draft" may refer to a stage wherein the initial state of the digital command message after it has been generated but before it is finalized and ready for transfer. In this status, the message can still be modified or edited by the administrator. Specific examples of modifications in the draft status may include updating the command details, changing configuration settings, or adding additional instructions.

Throughout the present disclosure, the stage "ready" may refer to the state of the digital command message when it has been finalized and is ready for transfer to the door device. In this status, the message can no longer be modified and is prepared for execution. Specific examples of actions that may change the status to ready include an administrator's approval or verification of the command details.

It may be provided that the door system is designed such that a prerequisite for transferring the command message to the configuration device is that the user authenticates in an application of the configuration device or another device. Specific examples of prerequisites may include successful user login, verification of user credentials, or completion of a security check. This authentication process may involve entering a username and password, using biometric data, or providing a security token.

Throughout the present disclosure, the term "application" may refer to a software program or mobile app that runs on the configuration device or another device, allowing the user to interact with the door system and perform device modification procedures. Specific examples of applications may include a mobile app, a web-based interface, or a desktop program.

Especially, if the key corresponds to the configuration device, the user might the authenticate in an application of another device, like a smartphone, a tablet, or a computer. The another device, also referred to as transfer device, is used to transfer the command messages from the computing unit to the configuration device. Since the key is not designed to communicate over the internet or a telecommunication network, the transfer device is necessary to bridge the communication gap between the computing unit and the key.

The technical advantages of requiring user authentication in an application of the configuration device or another device before transferring the command message may include enhancing the security and control over the device modification procedure.

Preferably, the authentication is reported back to the computing unit and preferably stored in the door system. Thereby, the computing unit stores who is responsible for transferring the command message to the configuration device.

It may be provided that the different device modification procedures are at least partially stored in a common computer program, especially in the computing unit. In another word: a common computer program is at least partially used to execute the different device modification procedures. This is enabled by the fact that the process stages are the same in the different device modification procedures.

Throughout the present disclosure, the term "common computer program" may refer to a software application or suite that is installed and runs on the computing unit, managing and executing the various device modification procedures. This program may integrate all the necessary functionalities and interfaces required to perform the modifications.

Preferably, conditions for different device modification procedures can be defined through APIs. Throughout the present disclosure, the term "APIs" (Application Programming Interfaces) may refer to a set of protocols and tools that allow different software applications to communicate and interact with each other. APIs may enable the definition and customization of conditions for device modification procedures, providing flexibility and extensibility to the system.

Alternatively or additionally, conditions for different device modification procedures can be defined through templates. Templates provide a pre-written structure or framework for writing software programs, helping developers to follow best practices and maintain consistency.

At least one of the following conditions for different device modification procedures can be defined through APIs and/or templates:
One condition to be defined, especially by APIs and/or templates, may be the condition for assuming the process stage "failed". As mentioned before, the process stage "failed" might be reached by unsuccessful transfer attempts, failures of decryption the command message, etc. The condition of reaching the process stage "failed" may vary for different device modification procedures.
One condition to be defined, especially by APIs and/or templates, may be the condition of the necessary authorization role of the user to carry out the manual step of the device modification procedure. The necessary authorization role may vary for different device modification procedures.
One condition to be defined, especially by APIs and/or templates, may be the condition of a necessary user role of the administrator to terminate device modification procedures to reach the process stage "cancelled" or for the process stage "ready". The necessary authorization role may vary for different device modification procedures.
One condition to be defined, especially by APIs and/or templates, may be the condition of necessary authentication of the user, in particular including an authentication type, to transfer the command message. The necessary authorization type may vary for different device modification procedures.
One condition to be defined, especially by APIs and/or templates, may be a temporal condition, in particular including that the execution and/or termination of device modification procedures can only be effected within certain time windows. The temporal condition may vary for different device modification procedures. Another temporal condition condition might be a time window or espiration date for a user or an administrator to be active in the device modification procedure.

It may be provided that the computing unit includes an output device, and different device modification procedures and their process stages are displayed together in a tabular form on the output device.

Throughout the present disclosure, the term "output device" may refer to any hardware component that presents data and information to the user. This device may include screens, monitors, displays, or any other visual interface that allows users to view the status and details of the device modification procedures. Specific examples of an output device may include an LCD monitor, a touchscreen display, or a computer screen.

Displaying different device modification procedures and their process stages together in a tabular form may enhance the organization and readability of the information, allowing users to quickly understand the status and progress of each procedure. This tabular display may facilitate better tracking and auditing of the modification procedure, as all relevant details are presented in a structured and comprehensive manner.

The object of the current invention is also reached by a method for carrying out multiple different digital device modification procedures for a door device of a door system. These different digital device modification procedures may especially carried out sequentially for the door device.

The door device may include an electronic memory for storing a digital configuration, wherein each device modification procedure of the multiple device modification procedures includes changing the digital configuration of the door device.

The different device modification procedures may differ in the type of digital configuration change.

The different device modification procedures may each include a process step that is manually carried out by a user using at least one configuration device.

According to the method of the invention, multiple process stages are digitally predefined for the different device modification procedures, and the process stages are the same in the different device modification procedures.

The invention will now be described in more detail using exemplary embodiments. Technical features with the same function are provided with identical reference signs in the figures. The figures show:
Figure 1: an inventive door system
Figure 2: authorization roles and user roles in the door system of Figure 1,
Figure 3: two exemplary embodiments of multiple inventive door systems,
Figure 4: a first device modification procedure for decommissioning a door device carried out by the inventive door system of Figure 1,
Figure 5: an second device modification procedurefor a firmware update of a door device carried out by the inventive door system of Figure 1,
Figure 6: a second device modification procedure for decommissioning a door device carried out by the inventive door system of Figure 1,
Figure 7 an abstract view of the process stages which are carried out by a door system according to Figure 1 and which are part of each of the methods of Figures 4 to 6,
Figure 8 an view of an output device of the door system,
Figure 9 another example of a door system according to the invention.

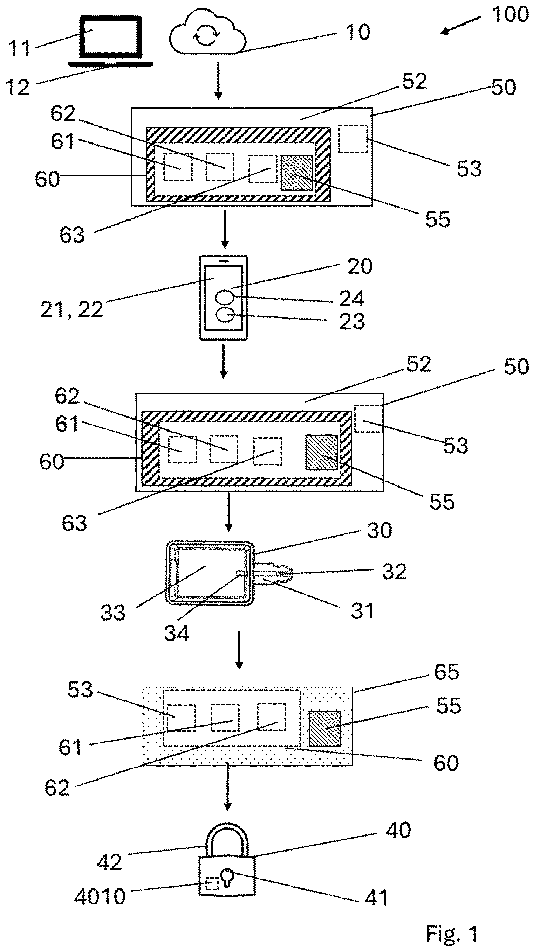

Figure 1 shows an inventive door system 100 which is designed as a locking system. The inventive door system 100 includes a computing unit 10, which is designed as a cloud server or a part of a cloud server. The computing unit 10 further includes a computer with a screen as the output device 11 of the computing unit 10 and a keyboard as the input device 12 of the computing unit 10. The computing unit 10 is designed to communicate with a transfer device 20, which is designed as a mobile phone, over a telecommunications network.

The transfer device 20 has a touch display that serves as both the input means 21 and the output means 22. The transfer device 20 includes a mobile phone number as transfer information, allowing the transfer device 20 to communicate wirelessly with the computing unit 10 over a third communication connection. The transfer device 20 includes an electronic memory and an electronic processor. An application is stored on the transfer device 20. A key holder as a user can authenticate himself in the application.

The inventive door system 100 further includes multiple keys 30, one of which is shown in Figure 1. The key 30 serves as a configuration device. The inventive door system 100 also includes multiple door devices 40 which are designed as locking devices , one of which is shown in Figure 1. The key 30 includes a key shaft 31 that can be inserted into a key channel 41 of the door device 40. The key shaft 31 includes a transmission element 32 that corresponds with a transmission element of the door device 40 (not shown). Using the transmission element 32 of the key 30 and the transmission element of the door device 40, electrical energy and digital data can be transferred from the key 30 to the door device 40. Thus, a first communication connection can be established. If the electronic data includes a digital access authorization or the positive result of an access authorization check conducted in the key, an electric actuator of the door device 40 is activated. This allows an eccentric cam of the door device 40 to be turned by the key 30 for unlocking a door.

It is also possible to transfer digital data from the door device 40 to the key 30. The key 30 includes an electrochemical energy storage that provides electrical energy to the door device 40. The transfer of electrical energy and electronic data occurs through electrical contacts of the transmission elements.

The door device 40 includes an electronic memory 4010 for storing a digital configuration.

The key 30 includes a button 33. When the button 33 is pressed, a second communication connection to the transfer device 20 is established. The wireless second communication connection is, for example, a Bluetooth Low Energy (BLE) connection or another near-field communication.

Thus, digital data can be transferred from the computing unit 10 via the telecommunications connection to the transfer device 20, via the wireless second communication connection to the key 30 as configuration device, and via the transmission elements to the door device 40. Digital data can also be transferred from the door device 40 to the computing unit 10 via the described path.

According to the invention, this path can be used to change the configuration of the door device 40 by multiple device modification procedures 200, 300, 400. For this purpose, a command 60 to change the configuration of the door device 40 is transferred from the computing unit 10 to the key 30 via the transfer device 20. This is a prerequisite for performing the configuration change of the door device 40. Not just any key 30 of the door system 100 can receive such a command. Rather, one or more keys 30 are selected by the computing unit 10 based on a criterion stored in the computing unit 10, and the selected key is then to command the configuration change to the door device. The key 30's crucial function lies in its design being more tamper-proof than the device 20. The transfer device 20 is used to bridge the long distance between the key 30 and the computing unit 10 in terms of communication. Since the key 30 can be carried by the key holder, it is capable of transferring commands to change the configuration to various door devices 40 of the door system 100.

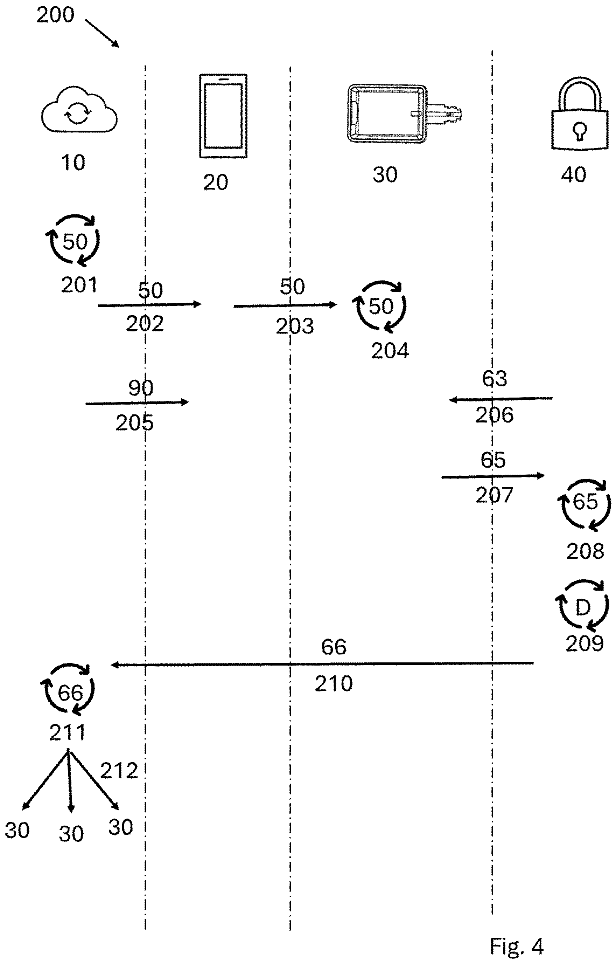

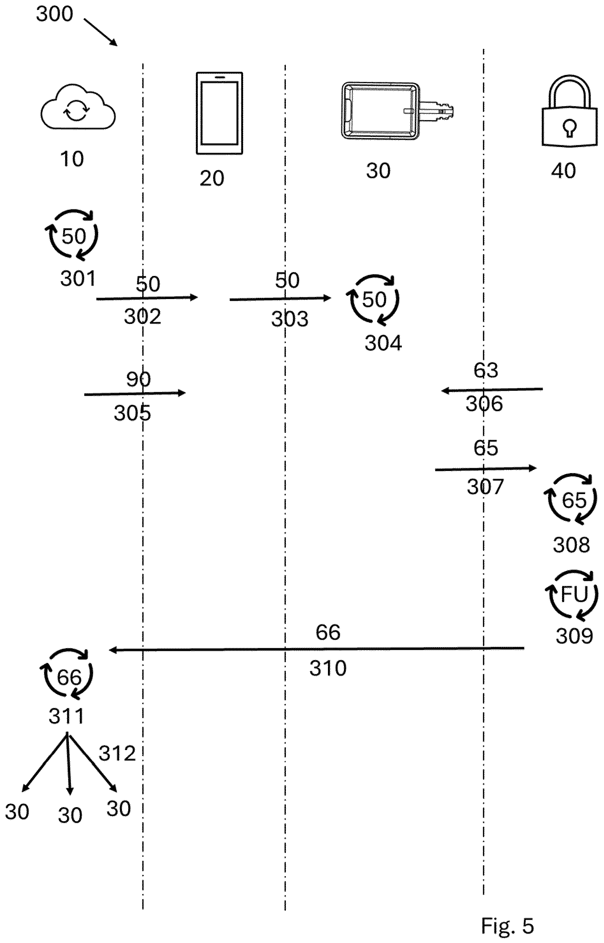

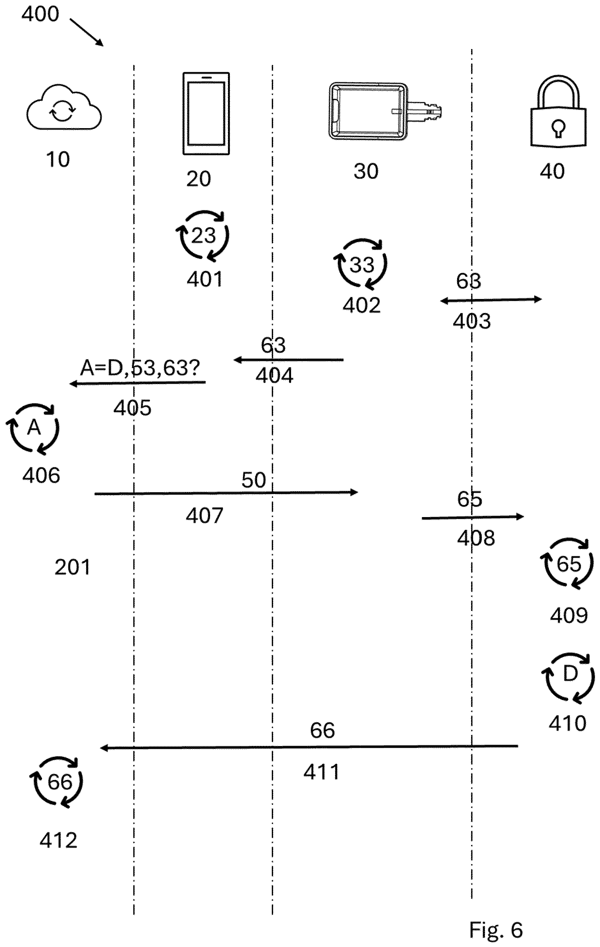

According to the invention, there are different types of device modification procedures 200, 300, 400. On the one hand, the firmware of the door device 40 can be updated as shown in Figure 5 as one type of a device modification procedure. On the other hand, the door device 40 can be decommissioned as shown in Figures 4 and 6 as another type of a device modification procedure. According to the invention, the different types of device modification procedures 200, 300, 400 contain the same predefined process stages 2000, 2001, 2002, 2003, 2004, 2005, independent of the type of device modification procedure 200, 300, 400.

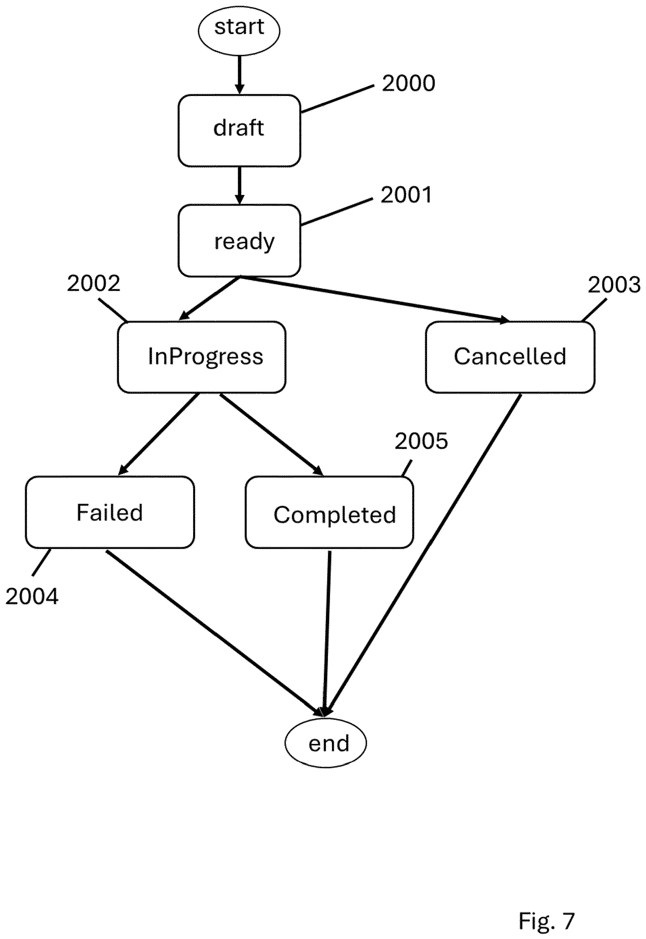

Figure 7 shows these different process stages 2000, 2001, 2002, 2003, 2004, 2005 which are the same for each type of device modification procedure 200, 300, 400. The first predefined process stage after starting the device modification procedure 200, 300, 400 is "draft" (process stage 2000) followed by "ready" (process stage 2001). Afterwards, the device modification procedure 200, 300, 400 can either move on to process stage "InProgress" (process stage 2002) or to process stage "cancelled" (process stage 2003). The process stage "InProgress" 2002 can either move on to process stage "failed" (process stage 2004) or to process stage "completed" (process stage 2005). When reaching the process stage "cancelled" 2003, "failed" 2004, or "completed", the device modification procedure 200, 300, 400 is terminated.

In Figure 7, the arrows between the process stages 2000, 20001, 2002, 2003, 2004, 2005 refer to transitions between the process stages 2000, 20001, 2002, 2003, 2004, 2005.

The different types of device modification procedure are carried out by a common computer program. The computing program defines the common process stages. Different conditions to reach stages in different types of device modification procedures are provided via API or subroutines.

Figure 1 shows how the command 60 to change the configuration of the door device 40 reaches the door device 40 from the computing unit 10. A command message 50 includes metadata 52. The metadata 52 includes a key ID 53, which uniquely identifies the key 30 in the door system 100. The metadata 52 are readable by the transfer device 20 and the key 30. The command message 50 further includes the command 60, which can only be decrypted by the key 30. The command 60 includes information about the type of configuration change 61, a configuration change number 62, and at least one locking device ID 63. The locking device ID 63 serves to uniquely identify the door device 40 in the door system 100. In the case of a firmware update as a configuration change of the door device 40, the command 60 further includes a firmware update data packet 55. The firmware update data packet 55 is encrypted in such a way that only the door device 40 can decrypt it. Because the command message 50 includes the key ID 53 and the locking device ID 63, it is already determined in the computing unit 10 which door device 40 should undergo a configuration change by which key 30. Since the command message 50 is mostly undecipherable by the transfer device 20, tampering can be avoided. The command message 50 is transferred from the computing unit 10 to the transfer device 20 via the telecommunications network.

To further increase tamper resistance, the key 30 can only receive the command message 50 stored in the transfer device 20 if the key holder has authenticated himself in the application and the application is open during the communication connection between the key 30 and the transfer device 20. Only the command messages 50 of the authenticated key holder are transferrable to the key 30. The key 30 only receives the command message 50 that includes the corresponding key ID 53. If multiple command messages 50 for the same key 30 are present in the transfer device 20, the key 30 receives the multiple command messages 50 when the communication connection between the key 30 and the transfer device 20 is established and the application is open after the key holder's authentication. It is not necessary for the third communication connection between the computing unit 10 and the transfer device 20 and the second communication connection between the key 30 and the transfer device 20 to be established simultaneously. Rather, the command message(s) 50 can first be transferred to the transfer device 20, and then, even if the communication connection between the device 20 and the computing unit 10 is interrupted, the command message(s) 50 can be transferred to the key 30.

The command 60 is then decrypted and checked by the key 30. A faulty command 60 or a faulty command message 50 is reported back to the computing unit 10 via the device 20, after which the computing unit 10 transfers the command message 50 again. A successful transfer of the command 60 or the command message 50 is also reported back to the computing unit 10 by the key via the device 20.

The key 30 generates a key-command message 65 for the door device 40. The key-command message 65 includes the information about the type of configuration change 61 and the configuration change number 62. If the configuration change is a firmware update, the key-command message 65 includes the firmware update data packet 55, which remains encrypted and only decryptable by the door device 40.

Optionally, the key-command message 65 can include the key ID 53. Using the key ID 53, the door device 40 can optionally check whether the key ID 53 is listed on a blacklist stored in the door device 40. The door device 40 only executes the command 60 if the key ID 53 is not on the blacklist.

The key 30 can encrypt the key-command message 65 so that the key-command message 65 can be decrypted by the door device. Instead of a single key-command message 65, the content of the key-command message 65 can also be divided into multiple key-command messages 65.

When the key 30 is inserted into the door device 40, the key 30 and the door device 40 verify each other by exchanging cryptographic information of the door system 100. The door device 40 transfers the locking device ID 63 to the key 30. This allows the key to check whether it has stored a key-command message 65 for the door device 40 that is in communication with the key. If the check is positive, the key transfers at least one key-command message 65 to the door device 40. This way, the key 30 commands the door device 40 to perform the configuration change.

When the key 30 has received the command message 50, the key 30 can only carry out the device modification procedure. Pressing the button 33 will not terminate the device modification procedure.

For each type of configuration change, a configuration change number is electronically stored in the door device 40. The stored configuration change number was saved by the door device 40 during the last configuration change of the same type. The door device 40 compares the stored configuration change number with the configuration change number 62 of the key-command message 65. The door device 40 only executes the command 60 if the configuration change number 62 of the key-command message 65 is higher than the stored configuration change number. This prevents outdated commands from being executed.

As will be further described with reference to Figure 6, additional conditions may apply before the command 60 is executed by the door device 40.

The execution of the command 60 is reported back to the computing unit 10 by the door device 40 via the key 30 and the transfer device 20. The computing unit 10 sends a message to the remaining keys 30 that also received the command 60 with the same information about the type of configuration change 61, the same configuration change number 62, and the same locking device ID 63. Upon receiving the message, the remaining keys 30 delete the command 60.

The computing unit 10 has stored a digital representation for each key 30 of the door system 100. The computing unit 10 has stored a digital representation for each door device 40 of the door system 100. The performed and reported configuration change of the door device 40 is stored in the digital representation of the door device 40. The execution of the command 60 is also stored in the digital representation of the key 30 that commanded the configuration change to the door device 40.

The digital representation of the key 30, which includes the key ID 53 of the key 30, is digitally associated with the identifier of the key holder in the computing unit. Thereby the key holder as a user is associated with the key. The selection of the key or keys that transfer the command to change the configuration to the door device 40 is determined in the computing unit 10 based on the key holder associated with the key 30. One criterion is the authorization role 70, 71 held by the key holder.

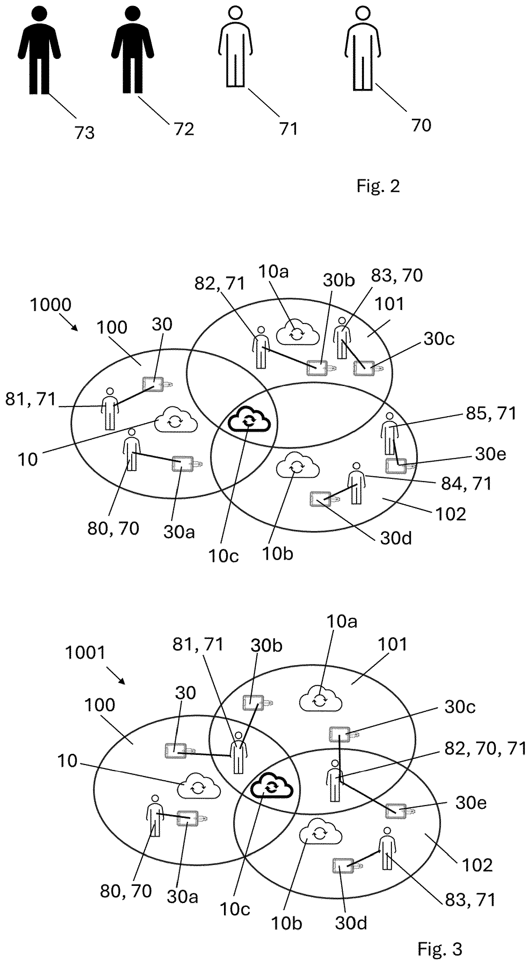

Figure 2 shows a concept for different roles 70, 71, 72, 73 within a door system 100. Key holders who possess a key in the door system 100 are shown in light color and are assigned an authorization role 70, 71. The key holders are on-site to interact with the door devices 40 using their keys 30. Other users who do not necessarily possess a key are shown in black in Figure 2. These other users shown in black perform administrative tasks and are assigned user roles.

An authorization role 70 corresponds to the role of an access authorized person 70. The access authorized person has at least one digital access authorization stored on the key for a door device of the door system. An access authorized person 70 is not allowed to decommission the door device 40. The access authorized person is allowed to perform a firmware update of the locking device 40.

An authorization role 71 corresponds to the role of a commissioner 71. The commissioner is allowed to decommission the door device 40. The commissioner is allowed to perform a firmware update of the door device 40. The commissioner is allowed to decommission all keys 30 of the door system 100. The commissioner is allowed to decommission both their own key 30 and the keys 30 of other key holders. The commissioner is allowed to have at least one access authorization stored on the key 30. However, it is not necessary for the commissioner to have access authorizations stored on the key to perform configuration changes. In particular, it is not necessary for the commissioner to have access authorization to the door device 40 that is to be decommissioned.

A user role 72 corresponds to the role of an administrator 72. The administrator 72 can select at least one key, , or confirm the selection of the computing unit 10 for a key that is to receive the command message to change the configuration of the door device 40. The administrator 72 can select door devices 40 on which the configuration change of the door device 40 is to be performed. The administrator 72 can select a key 30 to be decommissioned or confirm a request to decommission a key 30. An administrator 72 can assign authorization roles 70, 71 to key holders. The administrator 72 can create keys 30 in the door system 100 and grant access authorizations. The administrator 72 can change the status of the command message to "ready for transfer". Thus, the administrator can, in principle, also be a key holder with the authorization role of an access authorized person or a commissioner. However, the administrator 72 does not necessarily have to be a key holder.

It may be that only the roles 70, 71, 72 are provided in the door system 100.

An optional user role 73 corresponds to the role of a firmware updater 73. A firmware updater 73 is only allowed to select door devices 40 on which a firmware update is to be performed and to select the keys 30 that are to receive the command message 50 with the firmware update for the door device 40, considering the criteria. The firmware updater 73 is particularly a service employee of the manufacturer of the door system 100. The firmware updater 73 is not simultaneously a key holder.

Figure 3 shows two alternative concepts for a multiple door systems 100 which build up a security system 1000, 1001. The security system 1000 according to the first concept and the security system 1001 according to the second concept each include multiple door systems 100, 101, 102, here exemplarily three door systems 100, 101, 102, whose door devices 40 are not shown in Figure 3. The door systems 101, 102, 103 are exemplarily represented as circles.

Each door system includes a computing unit 10, 10a, 10b, which represents a virtual area of the cloud server. A shared area 10c of the cloud server is used to provide new firmware updates and is operated, for example, by the manufacturer of the door systems 100, 101, 102.

The keys 30, 30a, 30b, 30c, 30d, 30e in both security systems 1000, 1001 are each assigned to exactly one door system 100, 101, 102, as shown in Figure 3 by the arrangement of the keys 30, 30a, 30b, 30c, 30d, 30e within the respective circles of the door systems 100, 101, 102. Additionally, the keys 30, 30a, 30b, 30c, 30d, 30e are each assigned to exactly one key holder 80, 81, 82, 83, 84, 85 in both security systems 1000, 1001. The assignment of the key 30, 30a, 30b, 30c, 30d, 30e to the key holder 80, 81, 82, 83, 84, 85 is depicted in Figure 3 by a line.

In security system 1000, all key holders 80, 81, 82, 83, 84, 85 are assigned to exactly one door system 100, 101, as shown in Figure 3 by the arrangement of the key holders 80, 81, 82, 83, 84, 85 within the circle of the respective door systems 100, 101, 102. Additionally, each key holder 80, 81, 82, 83, 84, 85 in security system 1000 possesses exactly one key 30, 30a, 30b, 30c, 30d, 30e. The key holders 80, 81, 82, 83, 84, 85 have different authorization roles 70, 71 in security system 1000. Each key holder 80, 81, 82, 83, 84, 85 has exactly one authorization role 70, 71. The key holders 80, 83 are access authorized persons 70. The key holders 81, 82, 84, 85 are commissioners 71.

In security system 1001, on the other hand, some key holders 81, 82 are assigned to multiple door systems 100, 101. Other key holders 80, 83 are assigned to only one door system 100, 102, with these key holders 80, 83 each holding exactly one authorization role 70 or 71. The key holder 81, who is assigned to door systems 100, 101, has the same authorization role as a commissioner 71 in both door systems 100, 101. However, key holders can have different authorization roles in each door system 100, 101, 102 of security system 1001. This is exemplified by key holder 82. Key holder 82 acts with key 30c in door system 101 as an access authorized person 70 and with key 30e in door system 102 as a commissioner 71.

Figures 4 to 6 show different device modification procedures for decommissioning a door device. Arrows indicate the transfer of digital data. A circle with arrows indicates digital processing steps in one of the involved devices 10, 20, 30, 40. From top to bottom, a timeline is shown in Figures 4 to 6.

Figure 4 shows a first embodiment of a device modification procedure 200 for decommissioning a door device 40. In a first process step 201, a door device 40 is selected for decommissioning using the input and output device 11, 12. The selection is stored in the digital representation of the door device 40. Then, the computing unit 10 suggests at least one key 30 of a commissioner 82 on the output device 11 to carry out the decommissioning on-site. The computing unit 10 considers the authorization role of the key holders of the relevant keys 30 as a selection criterion and suggests suitable keys 30. An administrator 83 confirms the selection of the key 30 via the input device 12. The task of decommissioning the selected door device 40 is digitally stored in the digital representation of the selected key 30. During this process, the device modification procedure is in the process stage "draft" 2000. A corresponding command message 50 is generated by the computing unit 10 in encrypted form. A configuration change is only possible through such a generated command message 50, i.e., after selecting the door device 40 whose configuration is to be changed and selecting the key as the tool for the configuration change using the computing unit 10.

When the command message has been generated in the computing unit 10, the device modification procedure is in the process stage "ready" 2001. Reaching the process stage "ready" might require an input at the input device 12 by an administrator so that the stage wherein the command message 50 cannot be changed is clearly defined. In the process stage "ready", the command message 50 is ready for the transfer to the transfer device 20, but not yet transferred. At this process stage 2001, the administrator 83 has the chance to terminate the device modification procedure by inactivating the command message 50. Performing this inactivation, the device modification procedure moves to the process stage "cancelled". Reaching the process stage "cancelled" terminates the device modification procedure.

In a second process step 202, the command message 50 is transferred via the telecommunications network using the mobile phone number of the transfer device 20, which is stored in the computing unit 10 as belonging to the key holder of the selected key 30. After the command message 65 being transferred to the transfer device 20, the device modification procedure moves to the process stage "InProgress". The transfer of the command message corresponds to a condition for the transition between the process stage "ready" and "InProgress"

In a third process step 203, the command message 50 is transferred from the transfer device 20 to the key 30. For this, the key holder must authenticate themselves in the application on the device 20 and establish the communication connection between the device 20 and the key 30 by pressing the button 33.

In a fourth process step 204, the key 30 decrypts the command message 50 and reports the successful reception of the command message 50 back to the computing unit 10 via the device 20.

The computing unit 10 sends a separate message 90 in a process step 205, instructing the transfer device 20 to decommission the door device 40. The transfer device 20 displays the message 90 on the output means 22. The commissioner 82 reads the message 90 with the task of decommissioning the door device 40 and proceeds to the corresponding door device 40.

On-site, the commissioner 82 inserts the key 30 into the door device 40 in a process step 206. This process step corresponds to the manual process step to be carried out manually by an user. The key 30 and the door device 40 then verify each other. Additionally, the door device transfers the locking device ID 63 to the key 30. If the key 30 and the door device 40 cannot verify each other, the device modification procedure 200 is aborted. In this case, the device modification process moves on to the process stage "failed". The failure of verification of each other is a condition for the transition of the process stage "in Progress" to the process stage "failed". The process stage "failed" is automatically reached by the failure of the verification.

In the case of successful verification, the key 30 checks whether it has stored a command 60 for the door device 40 with the locking device ID 63. Since this is the case here, the key 30 subsequently automatically transfers the key-command message 65 to the door device 40 in a process step 207. The door device 40 decrypts the key-command message 65. Optionally, the door device 40 checks whether the key 30 is listed on the blacklist stored in the door device 40. If the key is on the blacklist, the device modification procedure is aborted. In this case, the device modification process moves on to the process stage "failed". The key 30 being on the blacklist is a condition for the transition of the process stage "in Progress" to the process stage "failed".

If the key is not listed on the blacklist, the device modification procedure continues.

The door device 40 compares the configuration change number of the key-command message 65 with a configuration change number for decommissioning stored in the door device 40 in a process step 208. The decommissioning D is only performed if the configuration change number of the key-command message 65 is greater than the stored configuration change number. If the configuration change number of the key-command message is lower than or equal to the configuration change number stored in the door device 40, the device modification procedure is aborted. In this case, the device modification process moves on to the process stage "failed".

In the next process step 209, the decommissioning D is performed. For this purpose, the door device 40 deletes the cryptographic information of the door system 100. The door device 40 activates the cryptographic information stored in the door device 40 during its manufacture. Furthermore, the door device 40 deletes a code that associates the door device 40 with the digital representation of the door device 40. Additionally, the door device 40 generates a code that allows association with a digital representation in another door system 100. Furthermore, the door device 40 deletes a code that associates the door device with a door system 100. The door device 40 generates a code that allows association with another door system 101, 102.

During process steps 206 to 209, the key 30 must remain inserted in the locking device 40; otherwise, the device modification procedure 200 is aborted.. In this case, the device modification process moves on to the process stage "failed". The retraction of the key 30 during the process steps 206 to 209 is the condition for the transition of the process stage "in Progress" to the process stage "failed". The process stage "failed" is automatically reached by the retraction of the key.

After the successful decommissioning D of the door device 40, a digital message 66 indicating that the door device 40 has been decommissioned with the help of the key 30 is sent to the computing unit 10 via the key 30 and the transfer device 20 in a process step 210. This is shown in Figure 4 as a continuous arrow, although the message 66 can also be stored in the key 30 and/or the transfer device 20 for a longer period.

After receiving the message 66, the computing unit changes the status of the digital representation of the door device 40 to "decommissioned" in a process step 211. The computing unit 10 deletes the code that links the digital representation with the door device 40. The device modification procedure moves on to the process stage "completed". Receiving the message 66 and the status change in the digital representation are conditions for the transition from the process stage "in Progress" to the process stage "completed". The process stage "completed" is automatically reached by receiving the message 66. There is no input via the input device 12 necessary to reach the process stage "completed".

If a new door device 40 is put into operation at the same location, the digital representation of the door device 40 can be reactivated with the code of the new door device 40.

The computing unit 10 stores in process step 211 which key 30 commanded the decommissioning D of the door device 40. If the computing unit 10 sent the command 60 to multiple keys, it informs all keys that have stored the command 60 in a process step 212 to delete the command.

Figure 5 shows a device modification procedure 300 analogous to the device modification procedure 200, with which the door device 40 is to receive a firmware update FU. In a first process step 301, a door device 40 is selected for a firmware update FU with a firmware version using the input and output device 11, 12. For this purpose, the computing unit 10 can compare a firmware version number stored in the digital representations of the door devices 40 of the door system 100 with a firmware version number of the firmware update data packet to be installed. The computing unit 10 can suggest door devices 40 for a firmware update whose firmware version number stored in the digital representation is lower than the firmware version number of the firmware update data packet to be installed. An administrator of the door system 100 can confirm or reject the suggestion. Alternatively or additionally, a firmware updater can confirm or reject the suggestion. The selection is stored in the digital representation of the door device 40. In this first process step 301, the device modification procedure 200 is in the process stage "draft".

Then, the computing unit 10 suggests at least one key 30 of a key holder on the output device 11 to carry out the firmware update on-site. The administrator or the firmware updater confirms the selection of the key 30 via the input device 12. The task of updating the selected door device 40 with a firmware update is stored in the digital representation of the selected key 30. A corresponding command message 50 is generated by the computing unit 10 in encrypted form. After the generation of the command message 50, the device modification procedure 300 moves to the process stage "ready". At this process stage, the administrator 83 has the chance to terminate the device modification procedure by inactivating the command message 50. Performing this inactivation, the device modification procedure moves to the process stage "cancelled".

The subsequent steps 302, 303, and 304 correspond to steps 202, 203, and 204 of Figure 4.

The computing unit 10 sends a separate message 90 in process step 305, instructing the device 20 to perform a firmware update on the door device 40. The device 20 displays the message 90 on the output means 22. After reading the message, the key holder proceeds to the selected door device 40.

Process steps 306 and 307 correspond to process steps 206 and 207 from Figure 4.

In process step 308, the door device 40 compares the configuration change number of the key-command message 65 with a configuration change number for the firmware update stored in the door device 40. Additionally, the stored firmware version number in the door device 40 is compared with the firmware version number of the key-command message 65. The firmware update FU is only performed if the configuration change number and the firmware version number of the key-command message 65 are greater than the stored configuration change number and firmware version number, respectively.

If the configuration change number of the key-command message is lower than or equal to the configuration change number stored in the door device 40, the device modification procedure is aborted. In this case, the device modification process moves on to the process stage "failed".

If the firmware version number of the key-command message is lower than or equal to the firmware version number stored in the door device 40, the device modification procedure is aborted. In this case, the device modification process moves on to the process stage "failed". The firmware version number in the key command message 65 being less than or equal to the stored firmware version number, is a condition for the transition of the process stage "in Progress" to the process stage "failed". This is a condition specific for the device modification procedure firmware update. Thereby, different condition in different device modification procedures 200, 300, 400 can be defined although the process stages 2000, 2001, 2002, 2003, 2004, 2005 are the same.

If the configuration change number and the firmware version number of the key-command message 65 are greater than the stored configuration change number and firmware version number, respectively, the firmware update FU is performed in the next process step 309. For this purpose, the firmware update data packet is decrypted, verified, and installed. The configuration number and the firmware version number of the key-command message 65 are stored.

During process steps 306 to 309, the key 30 must remain inserted in the door device 40; otherwise, the device modification procedure is aborted. In this case, the device modification process moves on to the process stage "failed". The retraction of the key 30 is the condition for the transition of the process stage "in Progress" to the process stage "failed". The process stage "failed" is automatically reached by the retraction of the key.

Inserting the key 30 in the door device 40 corresponds to the manual step carried out by the user.

The key 30 includes an light 34 (see Fig. 1), which displays the progress of the firmware update FU.

After the firmware update FU is successfully performed, the key 30 changes the display of the light 34. A message 66 indicating that the doordevice 40 has undergone a firmware update FU with the help of the key 30 is sent to the computing unit 10 via the key 30 and the transfer device 20 in process step 310, which is analogous to process step 210 of Figure 4.

After receiving the message 66, the computing unit 10 updates the firmware version number in the digital representation of the door device 40. The computing unit 10 stores which key 30 commanded the firmware update FU for the door device 40. The device modification process 300 moves on to the process stage "completed" and is terminated.

If the computing unit 10 sent the command 60 to multiple keys 30, it informs all keys with the command 60 in process step 312 to delete the command 60. Thereby, the device modification procedure in the other keys move to the process stage "failed".

Alternatively and not shown, command messages 50 for several keys can be generated in the computing unit 10. However, if a first command message 50 to a transfer device 20 is performed, the other command messages 50 in the computing unit 10 are deleted or deactivated, so that the corresponding device modification procedures move to the stage "cancelled".

Figure 6 shows an alternative device modification procedure 400 for decommissioning D the door device 40. A commissioner 71 authenticates themselves in the application and presses a decommissioning field 23 in the application in process step 401. The decommissioning field 23 is displayed on the output means 22 of the device 20 (see Figure 1).

The output means 22 then instructs the commissioner 71 to establish the communication connection to the key 30 by pressing the button 33. Additionally, the output means 22 instructs the commissioner 71 to insert the key 30 into the key channel 41. The commissioner 71 presses the button 33 of the key 30 in process step 402 and inserts the key 30 into the key channel 41 in process step 403. The key 30 and the door device 40 then verify each other. Additionally, the door device transfers the locking device ID 63 to the key 30. If the key 30 and the door device 40 cannot verify each other, the device modification procedure 400 is aborted.

If a command 60 for decommissioning the door device 40 with the transferred locking device ID 63 has already been stored in the key 30, the key-command message 65 can now be transferred to the door device 40. Subsequently, the door device 40 can perform at least one verification step, the decommissioning, and the feedback to the computing unit analogously to process steps 208, 209, and 210. From process step 403 until the completion of the decommissioning D, the key 30 must remain inserted in the door device 40, analogous to process step 209. The computing unit 10 can also perform subsequent steps analogous to steps 211 and possibly 212. It is also possible that the command 60 is stored in the device 20 and first transferred to the key 30 before the key-command message 65 is transmitted to the door device 40, and only then do the remaining steps proceed analogously to 208 to 211, possibly 212, as described. The process stages are the same as in the device modification procedure in Figure 4, since the command message 50 is first generated in the computing unit 10, then transferred to the key 30 as configuration device 40 and then executed in the door device 40.

If no command 60 for decommissioning D the door device 40 is stored in the device 20 or the key 30, the locking device ID 63 is reported from the key 30 to the device 20 in process step 404.

It is not possible to decommission the door device 40 without involving the computing unit 10. Therefore, in process step 405, the transfer device 20 sends a request A to decommission the door device 40, along with the key ID 53 and the locking device ID 63, to the computing unit 10. The computing unit 10 processes the request A in process step 406. Here, the computing unit 10 checks the authorization role of the key holder of the key 30 with the received key ID 53. If the authorization role does not permit decommissioning, the device configuration procedure 400 ends. If the authorization role permits decommissioning the door device 40, the computing unit 10 suggests to the administrator to allow the decommissioning D. The device modification procedure is now in the stage "draft". If the administrator denies permission, the device modification procedure 400 ends. If the administrator grants permission, the device modification procedure moves to process stage "ready". Afterwards the computing unit 10 sends the command message 50 via the device 20 to the key 30 in process step 407 which , where it is decrypted in the key 30. The device modification procedure moves to process stage "InProgress".

Subsequently, a key-command message 65 is transferred to the door device 40 in process step 408, the configuration change number is checked in process step 409, and the decommissioning D is performed in process step 410. These process steps proceed as described in process steps 207, 208, and 209. Subsequently, in process step 411, a message 66 indicating that the door device 40 has been decommissioned with the help of the key 30 is sent to the computing unit 10 via the key 30 and the device 20, analogous to process step 210. The computing unit 10 processes the message 66 in process step 412, which proceeds analogously to process step 211. The process stage is moved to "completed". Between process steps 403 and 411, it is essential that the key remains inserted in the door device.

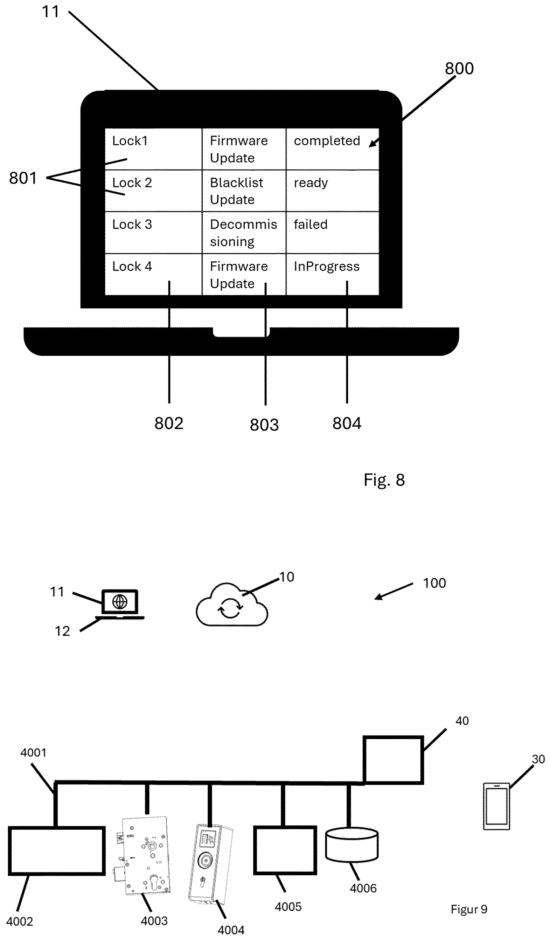

Figure 8 shows the output device 11 of the computing unit 10. A table 800 is visible on the output device 11. Each line 801 of the table 800 belongs to one device modification procedure. The first column 802 of the table 800 refers to the door device 40 which is supposed to change its configuration. The second column 803 of the table 800 refers to the type of device modification procedure. The third column 804 of the table 800 refers to the current process stage of the device modification procedure.

Figure 9 shows another example of a door system 100 according to the invention. The door system of Figure 9 also comprises a computing unit 10, an input device 12 and an output device 11 as in the first example. The door system 100 comprises several door devices for a door. One door device is designed as a motorized door drive 4002. Another door device is designed as motor lock 4003. Furthermore, the door system 100 comprises an escape route control 4004 with an emergency button, an electromagnetic door lock 4005 and a hazard detector 4006. One door device is a control unit 40. The door devices are connected via a databus 4001.

In general, each door device 4002, 4003, 4004, 4005, 4006, 40 owns an electronic memory storing a digital configuration. Therefore, each door device 4002, 4003, 4004, 4005, 4006, 40 can be the target of a device modification procedure. However, the control unit as door device 40 is designed to coordinate the other door devices 4002, 4003, 4004, 4005, 4006. The control unit 40 stores parameter for operating the other door devices 4002, 4003, 4004, 4005, 4006. The control unit 40 comprises a firmware that needs to be updated. The control unit 40 comprises computer programming instructions for coordinating the unlocking/locking by the motor lock 4003 and the door lock 4005 and the opening/closing of the door by the door drive 4002.

The control unit 40 can be updated and commissioned by a configuration device 30 that is designed as smartphone.

E. g. the updating of the firmware and the commissing of the control unit 40 are different types of device modification procedures which both comprises the process stages as shown in Figure 7.

The configuration device 30 can communicate with the computing unit 10 via a telecommunication network. The configuration device can communicate with the control unit 40 via Bluetooth Low Energy (BLE).

A firmware update command message for updating the control unit 40 is drafted and accepted in the computing unit 10 so that the process stages "draft" and "ready" are passed through. Before the command message is transmitted to the configuration device 30, an administrator can deactivate the command message so that the process stage "cancelled" is reached.

Once the command message is received by the configuration device 40, the process stage "InProgress" is reached. In some cases, the user has to authenticate himself in order to get the command message transferred to the configuration device.

When the configuration device 30 gets in communication with the control unit 40, the command message with the firmware update is transferred to the control unit 40. In some cases, it may be that the user has to perform an action in order to achieve that the configuration device 30 transfers the command message to the control unit 40.

The command message comprises the updated firmware version and a firmware version number. The firmware version number is checked by the control unit 40. If the firmware version number of the-command message is lower than or equal to the firmware version number stored in the control unit 40, the device modification procedure is aborted. In this case, the device modification process moves on to the process stage "failed". The firmware version number in the command message being less than or equal to the stored firmware version number, is a condition for the transition of the process stage "in Progress" to the process stage "failed". This is a condition specific for the device modification procedure firmware update.

If the command message comprises a firmware version number greater than the stored firmware version number, the control unit 40 performs the firmware update. After the successful firmware update, the process stage moves on to "completed".

A commissioning command message for commissiong the control unit 40 can also be drafted and accepted in the computing unit 10 so that the process stages "draft" and "ready" are passed through for the device modification procedure "commissioning". Before the command message is transmitted to the configuration device 30, an administrator can deactivate the command message so that the process stage "cancelled" is reached.

Once the command message is received by the configuration device 30, the process stage "InProgress" is reached. In some cases, the user has to authenticate himself in order to get the command message transferred to the configuration device.

The command message for commissioning can comprise parameter and/or computer programming instructions for coordinating other door devices conntected to the data bus 4001.

When the configuration device 30 gets in communication with the control unit 40, the command message is transferred to the control unit 40. In some cases, it may be that the user has to perform an action in order to achieve that the configuration device 30 transfers the command message to the control unit 40.

If the control unit 40 fails to install the parameter and/or computer programming instructions, the process stage "failed" is reached.

If the control unit 40 succeeds to install the parameter and/or computer programming instructions, the process stage "completed" is reached.

## Claims

1. Door system (100-103) with a computing unit (10, 10a, 10b) and a door device (40) for unlocking and/or opening a door,
wherein the door device (40) includes an electronic memory (4010) for storing a digital configuration,
wherein the door system (100-103) is designed to provide multiple different device modification procedures for the door device (40), which are configured to change the digital configuration of the door device (40), wherein each device modification procedure (200, 300, 400) of the multiple device modification procedures (200, 300, 400) includes changing the digital configuration of the door device (40),
wherein the different device modification procedures differ in the type of digital configuration change,
wherein the different device modification procedures are each designed such that a process step (201-212, 301, 305-310, 312, 401-412) is to be carried out manually by an user using at least one configuration device (30),
wherein multiple process stages (2000-2005) are digitally predefined for the different device modification procedures, and the process stages (2000-2005) are the same in the different device modification procedures.

2. Door system (100-103) according to claim 1, wherein transitions are defined in the device modification procedures (200, 300, 400), indicating which process stage (2000-2005) can transition into which other process stage (2000-2005), and the transitions are the same for the different device modification procedures.

3. Door system (100-103) according to claim 1 or 2, wherein at least partially a transition from one process stage (2000-2005) to the next process stage (2000-2005) depends on at least one condition, wherein the condition is differently defined for the different device modification procedures and stored in the door system (100-103).

4. Door system (100-103) according to claim 2 or 3, wherein the device modification procedures (200, 300, 400) are only terminated by the process stages (2000-2005) "cancelled", "failed", and "completed", wherein the process stages (2004, 2005) "failed" and "completed" are automatically reached by the occurrence of a condition.

5. Door system (100-103) according to claim 4, wherein the process stage "cancelled" (2003) is only assumed if digital data for direct or indirect transfer to the configuration device (30) is provided in the computing unit (10) but not transferred, and subsequently the computing unit (10) receives a command to terminate the device modification procedure (200, 300, 400) via an input device (12) of the computing unit (10), in particular to deactivate the electronic data.

6. Door system (100-103) according to any of the preceding claims, wherein the configuration device (30) is designed to only carry out a device modification procedure (200, 300, 400), and the configuration device (30) is designed to be free of a manual input option to terminate the device modification procedure (200, 300, 400).

7. Door system (100-103) according to any of the preceding claims, wherein the door system (100-103) is designed such that only the computing unit (10, 10a, 10b) can start device modification procedures (200, 300, 400) in the computing unit (10, 10a, 10b), wherein a device modification procedure (200, 300, 400) is started by generating a digital command message, wherein the digital command message (50) includes an ID (53, 63) of the configuration device (30), and at least one digital command (60) of the digital command message (60) is used to be transferred to the door device (40), wherein the door device (40) is designed to change the configuration based on the digital command (60).

8. Door system (100-103) according to claim 7, wherein the door device (40) is designed to automatically receive the digital command when the door device (40) is in communication connection with the configuration device (30) and automatically execute the digital command (60).

9. Door system (100-103) according to claim 7 or 8, wherein an authorization role (70, 71) of the user is stored in the computing unit (10, 10a, 10b), and the door system (100-103) is designed such that the device modification procedure (200, 300, 400) is only started if the authorization role (70, 71) of the user, who has access to the configuration device (30) allows the execution of the device modification procedure (200, 300, 400) and/or the computing unit (10, 10a, 10b) suggests to an administrator (72, 83) only user with a matching authorization role (70, 71) or the computing unit (10, 10a, 10b) automatically selects user and/or configuration devices (30) for the device modification procedure (200, 300, 400).

10. Door system (100-103) according to any of claims 7 to 9, wherein after generating the digital command message, the digital command message can only be modified until an administrator (72, 83) changes the status of the command message (50, 65) to be ready for transfer through interaction with the computing unit (10, 10a, 10b).

11. Door system (100-103) according to any of claims 7 to 10, wherein the door system (100-103) is designed such that a prerequisite for transferring the command message (50, 65) to the configuration device (30) is that the user authenticates in an application of the configuration device (30) or another device (20), and the authentication is reported back to the computing unit (10, 10a, 10b) and preferably stored in the door system (100-103).

12. Door system (100-103) according to any of the preceding claims, wherein the different device modification procedures are stored in a common computer program in the computing unit (10, 10a, 10b), and at least one of the following conditions for different device modification procedures can be defined especially through APIs and/or templates:
• Condition for assuming the process status "failed";
• Necessary authorization role (70, 71) of the useruser
• Necessary authorization role (70, 71) of the administrator (72, 83) to termination of device modification procedures (200, 300, 400);
• Necessary authentication of the useruser, in particular including an authentication type, to transfer the command message (50, 65);
• Temporal condition, in particular including that the execution and/or termination of device modification procedures (200, 300, 400) can only be effected within certain time windows.

13. Door system (100-103) according to any of the preceding claims, wherein the computing unit (10, 10a, 10b) includes an output device (11), and different device modification procedures and their process stages (2000-2005) are displayed together in a tabular form on the output device (11).

14. Method for carrying out multiple different digital device modification procedures (200, 300, 400) for a door device (40) of a door system (100-103) (also sequentially),
wherein the door device (40) includes an electronic memory (4010) for storing a digital configuration, wherein each device modification procedure (200, 300, 400) of the multiple device modification procedures (200, 300, 400) includes changing the digital configuration of the door device (40),
wherein the different device modification procedures differ in the type of digital configuration change,
wherein the different device modification procedures each include a process step (201-212, 301, 305-310, 312, 401-412) that is manually carried out by an user using at least one configuration device (30),
wherein multiple process stages (2000-2005) are digitally predefined for the different device modification procedures, and the process stages (2000-2005) are the same in the different device modification procedures.
